(19) Europäisches Patentamt

European Patent Office

Office européen des brevets

(11) **EP 0 985 752 B1**

(12) **EUROPÄISCHE PATENTSCHRIFT**

(45) Veröffentlichungstag und Bekanntmachung des Hinweises auf die Patenterteilung:
**25.05.2005 Patentblatt 2005/21**

(51) Int Cl.⁷: **D01F 6/86**, C08G 63/668, C08G 63/692

(21) Anmeldenummer: **99114899.0**

(22) Anmeldetag: **30.07.1999**

(54) **Copolyesterfaser**

Copolyester fiber

Fibre en copolyester

(84) Benannte Vertragsstaaten:
**AT BE CH CY DE DK ES FI FR GB GR IE IT LI LU MC NL PT SE**

(30) Priorität: **10.09.1998 DE 19841375**

(43) Veröffentlichungstag der Anmeldung:
**15.03.2000 Patentblatt 2000/11**

(73) Patentinhaber: **Zimmer Aktiengesellschaft 60388 Frankfurt am Main (DE)**

(72) Erfinder: **Schumann, Heinz-Dieter, Dr. 63477 Maintal (DE)**

(56) Entgegenhaltungen:
**EP-A- 0 373 238**          **EP-A- 0 823 500**
**DE-A- 3 139 127**          **DE-B- 1 266 922**
**US-A- 3 576 773**

Bemerkungen:
Die Akte enthält technische Angaben, die nach dem Eingang der Anmeldung eingereicht wurden und die nicht in dieser Patentschrift enthalten sind.

**Beschreibung**

Die Erfindung bezieht sich auf eine Copolyesterfaser, bestehend aus einem Copolyester mit überwiegend $C_{2-4}$-Alkylenterephthalat-Einheiten, Polyethylenglykol-Einheiten und von polyfunktionellen Verbindungen wie Pentaerythrit abgeleiteten Einheiten, sowie auf ein Verfahren zur Herstellung dieser Copolyesterfaser durch Veresterung, nachfolgende Vorkondensation und Polykondensation von Terephthalsäure mit $C_{2-4}$-Alkylenglykol, Polyethylenglykol und einer polyfunktionellen Verbindung sowie Verspinnung in der Schmelze des erhaltenen Polyesters bei Aufspulgeschwindigkeiten von mindestens 3000 m/min.

Copolyesterfasern sind bekannt. In der DE-AS 1 266 922 wird ein Verfahren zur Herstellung von Fäden durch Schmelzverspinnen eines modifizierten Polyesters aus Terephthalsäure oder Isophthalsäure oder deren Dimethylester, Ethylenglykol, 0,05 bis 4,0 Mol-% Alkoxypolyalkylenglykol und 0,05 bis 2,4 Mol-% einer Polyhydroxyverbindung, wie Pentaerythrit, beschrieben. Die Fäden oder Fasern aus diesem modifizierten Polyester sind im wesentlichen frei von Verfärbungen.

In der US-A 5,756,033 wird ein Verfahren zur Herstellung von POY-Fasern aus Polyester, welcher etwa 150 bis 2500 ppm Carboxyethylenphosphonsäure-Einheiten enthält, beschrieben. Der Polyester kann auch bis zu 10 Gew.-% andere Comonomere, u. a. Polyglykole mit einem Molekulargewicht unter 1000 enthalten. Ein Zusammenhang oder eine Optimierung in bezug auf die Färbeeigenschaften der Fasern wird nicht offenbart.

In der US-A 4,086,208 wird ferner ein feuergehemmter Polyester beschrieben, der höchstens 10 Mol-% Polyethylenglykol-Einheiten und mindestens 2.500 ppm Carboxyethylenphosphonsäure-Einheiten enthalten kann.

In der DE 31 39 127 A1 wird ein Verfahren zur Herstellung eines Copolyesters offenbart, dem zur Verbesserung der Anfärbbarkeit und der Lichtbeständigkeit Glykole mit zweiwertigen aliphatischen Seitenketten oder zweiwertigen aliphatischen Ringsystemen und Metallsalze der 5-Isophthalsäure oder deren Estern zugesetzt werden. Des weiteren wird dort offenbart, dass der Einsatz von Polyethylenglykol mit einer Molmasse von 2000 g/mol zwar die Anfärbbarkeit verbessert, aber nicht den Ansprüchen an die Lichtbeständigkeit beziehungsweise Lichtechtheit genügt. Die Zugabe von Diethyl-2-carbethoxyethylphosphonat in fast allen Beispielen erfolgt in einer Größenordnung (ca. 70 ppm P), wie sie für Flammhemmung und Stabilisierung typisch ist.

Es ist ferner bekannt, Fasern aus Polyester mit Dispersionsfarbstoffen einzufärben. Das Einfärben ist jedoch technisch mit Problemen verbunden, da die großen Moleküle, aus dem die Dispersionsfarbstoffe bestehen, nur schwierig in die amorphen Anteile des teilkristallinen Polyesters eindringen und diffundieren können. Fasern aus nichtmodifiziertem Polyethylenterephthalat werden daher bei Temperaturen über 120 °C und Überdruck eingefärbt. Es ist jedoch auch möglich, organische Chemikalien zuzusetzen, die wie Weichmacher in das Polyethylenterephthalat eindringen und dieses aufquellen und damit für Farbstoffe leichter zugänglich machen. Dabei ist jedoch nachteilig, daß die zugesetzten organischen Chemikalien in der Regel toxische Substanzen sind, die die Abwässer stark belasten.

In der WO 92/13120 A werden nicht mattierte, feine, bei Atmosphärendruck ohne Zusatzchemikalien färbbare Fasern aus einem 3,9 Gew.-% Polyethylenoxid und 0,175 Gew.-% Trimethylolpropan enthaltendem Polyethylenterephthalat, welches keine Mattierungsmittel enthalten darf, beschrieben. Nachteilig in bezug auf gleichmäßige Verspinnbarkeit ist der hohe Anteil an Trimethylolpropan. Außerdem erfordern die Mehrzahl der Anwendungsfälle mattierte Fasern.

Der Erfindung liegt die Aufgabe zugrunde, eine Copolyesterfaser zu schaffen, die sich auf relativ einfache Weise mit Dispersionsfarbstoffen einfärben läßt. Dabei soll sichergestellt sein, daß die eingefärbten Fasern eine relativ hohe Anfärbtiefe bei gleichzeitig geringer Streifigkeit aufweisen. Der Erfindung liegt ferner die Aufgabe zugrunde, ein Verfahren zur Herstellung einer Copolyesterfaser zu schaffen, die sich auf relativ einfache Weise mit Dispersionsfarbstoffen einfärben läßt.

Die der Erfindung zugrunde liegende Aufgabe wird dadurch gelöst, daß im Copolyester > 4 bis 12 Gew.-% Polyethylenglykol-Einheiten und 60 bis 260 ppm Pentaerythrit-Einheiten einpolymerisiert sind. Die Angaben in ppm sind dabei auf das Gesamt-Copolymer bezogen. Es hat sich in überraschender Weise gezeigt, daß durch die Einstellung der Mengenbereiche von 60 bis 260 ppm einerseits und 150 bis < 2500 ppm andererseits eine Verstärkung der Anfärbtiefe der Copolyesterfasern bei gleichzeitiger Abnahme der Streifigkeit erzielt werden kann. Auf diese Weise läßt sich außerdem der nachteilige Einsatz von toxischen Substanzen (Carrier) beim Einfärben mit Dispersionsfarbstoffen vermeiden.

Eine bevorzugte Ausgestaltung der Erfindung besteht darin, daß im Copolyester 80 bis 200 ppm Pentaerythrit-Einheiten einpolymerisiert sind. Gemäß einer weiteren bevorzugten Ausgestaltung der Erfindung beträgt der Anteil an Polyethylenglykol-Einheiten 5 bis 9 Gew.-%. Nach einer weiteren bevorzugten Ausgestaltung der Erfindung liegt das Zahlenmittel des Molekulargewichtes der Polyethylenglykol-Einheiten zwischen 200 und 400 g/Mol. Bei Einhaltung dieser Mengenangaben wird ein Optimum in bezug auf Einfärbeeigenschaften, mechanische Eigenschaften und Verarbeitungseigenschaften der Fasern erzielt.

Die der Erfindung zugrundeliegende Aufgabe wird ferner durch ein Verfahren zur Herstellung einer Copolyesterfaser gelöst, bei dem dem Reaktionsgemisch vor der Vorkondensation > 4 bis 12 Ges.-% Polyethylenglykol mit einem Zahlenmittel des Molekulargewichtes zwischen 200 und 400 g/Mol und 60 bis 260 ppm Pentaerythrit zugesetzt werden. Die nach diesem Verfahren hergestellte Copolyesterfaser bewährt sich in besonders vorteilhafter Weise zur Einfärbung mit Dispersionsfarbstoffen, wobei sowohl eine hohe Anfärbtiefe als auch eine geringe Streifigkeit erzielt werden.

Gemäß einer weiteren Ausgestaltung der Erfindung werden Pentaerythrit und gegebenenfalls Polyethylenglykol zugesetzt, wenn 50 bis 95 % der Carboxylgruppen der Dicarbonsäure(n) des Veresterungsgemisches verestert sind. Erfolgt der Zusatz erst zu diesem Zeitpunkt, so ist die Ausbildung von Langkettenverzweigungen gewährleistet. Diese Langkettenverzweigungen führen zu einer veränderten Viskoelastizität des Copolyesters, d. h. die Polyesterschmelze wird kompressibel, kann Druckschwankungen aufnehmen und dämpft diese sowie die beim Spinnen auftretenden Fadenschwingungen mit der Folge gleichmäßigerer Fasern. Der Veresterungsgrad (U) kann hierbei aus der Verseifungszahl ($V_z$) und der Säurezahl ($S_z$) des Reaktionsgemisches gemäß U = ($V_z$-$S_z$) • 100/$V_z$ berechnet werden. Die Verseifungszahl wird durch Verseifung mit Kaliumhydroxid in n-Propanol und potentiometrische Titration und die Säurezahl durch potentiometrische Titration in Dimethylformamid bestimmt.

Nach einer weiteren besonders optimalen Ausgestaltung der Erfindung beträgt die Menge an Polyethylenglykol 5 bis 9 Gew.-% im Copolyester.

Die Menge an zuzusetzendem Pentaerythrit beträgt vorzugsweise 80 bis 200 ppm. Bei zu geringer Menge ist die Verspinnbarkeit ausreichend, die Dehnung der mit hoher Geschwindigkeit gesponnenen POY-Filamente jedoch zu gering für die Strecktexturierung. Bei etwas zu hoher Menge läßt zunächst nur die Festigkeit des DTY-Garnes zu wünschen übrig, während bei deutlich zu hoher Menge der Copolyester nicht mehr gut und gleichmäßig verspinnbar ist. Da Pentaerythrit unter den Bedingungen der Polyester-Synthese weder flüchtig ist noch flüchtige Verbindungen bildet, kann die Dosierung ohne Berücksichtigung eventueller Verluste erfolgen. Auch treten bei Rückführung von nicht gereinigtem Glykol (aus den Brüden der Kondensation) keine Störungen durch mitgerissenes Pentaerythrit auf.

Gemäß einer weiteren Ausgestaltung der Erfindung schließt sich eine Weiterverarbeitung der Copolyesterfasern durch Strecktexturierung bei Geschwindigkeiten von mindestens 500 m/min an. Da die mit mindestens 3000 m/min ersponnenen POY-Fasern aus dem erfindungsgemäßen Copolyester eine Bruchdehnung von mindestens 130 % aufweisen, lassen sie sich hervorragend durch Streckzwirnen oder bevorzugt Strecktexturieren bei Geschwindigkeiten von mindestens 500 m/min, vorzugsweise mindestens 600 m/min, zu DT- oder DTY-Garn mit normaler Dehnung (ca. 20 - 30 %) und guter Festigkeit (ca. 35 cN/tex oder mehr) verarbeiten. Die ausgezeichnete Verstreckbarkeit der erfindungsgemäßen POY-Fasern ermöglicht einen bis zu etwa 15 % höheren Spinndurchsatz, indem zunächst POY-Fasern mit höheren Titer ersponnen werden, der im nachfolgenden Streckprozeß durch höhere Verstreckung auf den Nominaltiter gebracht wird. Sogar bei der Weiterverarbeitung durch Weben oder Kettwirken konnte eine verringerte Fehlerquote und eine erhöhte Produktivität erreicht werden.

Das Schmelzspinnen kann in beliebiger, bekannter Weise vorgenommen werden, beispielsweise nach den Verfahren der US-Patente 4,940,559 oder 5,340,517. Hierbei kann die Polyesterschmelze nach der Polykondensation direkt versponnen werden oder zunächst granuliert und das Granulat vor dem Verspinnen erneut aufgeschmolzen werden. Das Streckzwirnen bzw. die Strecktexturierung erfolgen unter Verwendung handelsüblicher Vorrichtungen, vorzugsweise mit hoher Verarbeitungsgeschwindigkeit.

Die Herstellung des Polyesters erfolgt in an sich bekannter Weise kontinuierlich oder diskontinuierlich durch Direktveresterung von Terephthalsäure mit $C_{2-4}$-Alkylenglykol, nachfolgende Vorkondensation und Polykondensation, wobei erfindungsgemäß dem Reaktionsgemisch vor der Vorkondensation, zu Beginn oder während der Veresterung, vorzugsweise, wenn etwa 50 - 80 % der Carboxylgruppen der polyesterbildenden Dicarbonsäure(n) verestert sind, Polyethylenglykol und die Verzweigungskomponente(n) gemeinsam oder getrennt voneinander zugesetzt werden. Die Kondensation erfolgt in Gegenwart üblicher Katalysatoren, wie Antimon-, Titan- und/oder Germanium-Verbindungen. Mattierungsmittel, wie Titandioxid, und gegebenenfalls Farbstoffe, Blautöner und/oder Stabilisatoren können dem Reaktionsgemisch zu einem beliebigen Zeitpunkt der Polyestersynthese vor dem Verspinnen zugesetzt werden.

Die Alkylengruppen des $C_{2-4}$-Alkylenglykols und die des Polyethylenglykols können verschieden voneinander oder bevorzugt gleich sein. Vorzugsweise ist das $C_{2-4}$-Alkylenglykol Ethylenglykol. Terephthalsäure und/oder Ethylenglykol können zu einem geringeren Teil durch andere Dicarbonsäuren und/oder Diole, wie beispielsweise Isophthalsäure, 1,4-Cyclohexandicarbonsäure, 2,6-Naphthalindicarbonsäure, p-Hydroxybenzoesäure, 4,4'-Biphenyldicarbonsäure, Adipinsäure, Diethylenglykol, 1,3-Propandiol, 1,4-Butandiol, 1,4-Cyclohexandimethanol, ersetzt sein. Der Anteil dieser Comonomere sollte etwa 10 Masse-% im Polyester nicht überschreiten, da andernfalls die Fasereigenschaften von denen von Polyethylenterephthalat-Fasern zu stark abweichen. Bevorzugter Polyester ist Polyethylenterephthalat.

Das erfindungsgemäße Reaktionsgemisch polykondensiert schneller als Reaktionsgemische ohne Verzweigungskomponente, d. h. die gewünschte Polyester-Endviskosität wird bereits nach einer bis zu 10 % kürzeren Vorkondensations- und Polykondensationsdauer erreicht. Ebenfalls stark ausgeprägt ist die beschleunigende Wirkung bei einer eventuell anschließenden Festphase-Polykondensation.

Der Gegenstand der Erfindung wird anhand der nachstehenden Beispiele näher erläutert.

Beispiele 1 bis 3:

212 kg Terephthalsäure, 88 kg Ethylenglykol, 5,5 kg 2%ige Antimonacetatlösung in Ethylenglykol wurden unter Rühren homogen vermischt. Das Gemisch wurde in einem auf ca. 265 °C vorgeheizten und zu ca. 30 % mit Vorkondensat der vorhergehenden Charge und 3 kg 25%iger Titandioxid-Suspension in Ethylenglykol gefüllten Veresterungsreaktor innerhalb von ca. 140 min unter Normaldruck eingespeist und während weiterer 30 min bei 265 °C und Normaldruck unter Abtrennung des Reaktionswassers verestert. Nachdem 80 % der theoretischen Menge an Reaktionswasser abdestilliert waren, wurden 13,75 kg Polyethylenglykol (400), gelöst in 3,5 kg Ethylenglykol, in den Veresterungsreaktor zugegeben. Nach Zugabe von 14 g Phosphorsäure wurde die Vorkondensation eingeleitet, wobei der Druck langsam auf 50 mbar (abs.) abgesenkt und die Temperatur gleichzeitig auf ca. 275 °C innerhalb von 30 min erhöht wurde. Ca. 15 min vor Beginn der allmählichen Absenkung des Reaktionsdruckes wurden die in der nachstehenden Tabelle aufgeführten Mengen an Pentaerythrit, jeweils als warme Lösung in 1 kg Ethylenglykol, eingespeist. Das Vorkondensat wurde über einen 15 μm-Filter in den Polykondensationsreaktor eingeleitet, und der Druck innerhalb von 45 min auf unter 2 mbar (abs.) abgesenkt, und bei 280 °C die eigentliche Polykondensation bis zur gewünschten Intrinsic-Viskosität gemäß nachstehender Tabelle durchgeführt. Anschließend wurde der Polyester innerhalb von 20 min aus dem Polykondensationsreaktor ausgetragen und granuliert. Das Granulat wurde in einem Schmelzeextruder aufgeschmolzen, und die Schmelze mit etwa 295 °C durch eine 34-Lochdüsenplatte mit einem Düsenlochdurchmesser von 0,25 mm versponnen. Die Fasern wurden dabei in einem Blasschacht mit Querstromanblasung abgekühlt, anschließend mit Präparation (Typ Zimmer K105) versehen, gebündelt, in eine Abzugsmaschine mit einem 9fach umschlungenen Galettenduo geführt und letztlich aufgewickelt. Danach erfolgte eine Strecktexturierung der erhaltenen POY-Fasern mit einer Friktionstexturiermaschine, Modell BARMAG FK6-S-900 mit einer 1-7-1-Bestückung Keramikscheiben (Ceratex C 0,85 und SPK-C 0,85-M) und einer Temperatur des ersten und zweiten Heizkörpers von 195 °C bzw. 160 °C sowie einem D/Y-Verhältnis von 1 : 2,15 bzw. 1 : 2,2.

Beispiele 4 und 5 (Vergleichsbeispiele):

Bei den Beispielen 4 und 5 wurde nach der gleichen Verfahrensweise vorgegangen, wie bei den Beispielen 1 bis 3, wobei jedoch im Beispiel 4 auf die Zugabe von Polyethylenglykol und Pentaerythrit und gemäß Beispiel 5 auf die Zugabe von Pentaerythrit verzichtet wurde. Die so erhaltenen POY-Fasern sind insbesondere durch eine geringere Dehnung gekennzeichnet, was sich nachteilig auf die mögliche Texturiergeschwindigkeit auswirkt. Außerdem erhöht sich die Streifigkeit bei Fehlen von Pentaerythrit, und die Anfärbtiefe verschlechtert sich dramatisch bei Fehlen von Polyethylenglykol.

Die Einsatzmengen und die ermittelten Kennwerte gemäß der Beispiele 1 bis 5 sind in der nachstehenden Tabelle aufgeführt.

| Beispiel Nr. | | 1 | 2 | 3 | 4 | 5 |
|---|---|---|---|---|---|---|
| _Veresterung_ | | | | | | |
| Polyethylenglykol (400) | (kg) | 13,75 | 13,75 | 13,75 | - | 13,75 |
| Pentaerythrit | (g) | 38 | 50 | 62 | - | - |
| _Copolyester_ | | | | | | |
| Intrinsic-Viskosität | (dl/g) | 0,65 | 0,63 | 0,67 | 0,65 | 0,66 |
| Diethylenglykol | (Masse-%) | 0,8 | 0,8 | 0,8 | 0,7 | 0,8 |
| _POY-Garn*)_ | | | | | | |
| Aufspulgeschwindigkeit | (m/min) | 3200 | 3200 | 3500 | 3200 | 3200 |
| Gesamttiter | (dtex) | 139 | 139 | 128 | 292 | 292 |
| Dehnung | (%) | 135 | 141 | 141 | 130 | 134 |
| Festigkeit | (cN/tex) | 21 | 20 | 17 | 23 | 22 |
| _DTY-Garn*)_ | | | | | | |
| Texturiergeschwindigkeit | (m/min) | 800 | 800 | 800 | 600 | 600 |

*) POY = partially oriented yarn
DTY = drawn and textured yarn

(fortgesetzt)

| Beispiel Nr. | | 1 | 2 | 3 | 4 | 5 |
|---|---|---|---|---|---|---|
| DTY-Garn*) | | | | | | |
| Verstreckverhältnis | 1 : | 1,73 | 1,74 | 1,68 | 1,72 | 1,74 |
| Gesamttiter | (dtex) | 84 | 81 | 80 | 179 | 177 |
| Dehnung | (%) | 26 | 26 | 31 | 22 | 29,2 |
| Festigkeit | (cN/tex) | 38 | 37 | 30 | 40,2 | 37,7 |
| Anfärbetiefe | (%) | 900 | 1300 | 1500 | 100 | 950 |
| Streifigkeit | (Stufe) | 2 | 2+ | 2- | 2 | 3 |

*) POY = partially oriented yarn
DTY = drawn and textured yarn

Die Intrinsic-Viskosität wurde bei 25 °C an einer Lösung von 500 mg Polyester in 100 ml eines Gemisches aus Phenol und 1,2-Dichlorbenzol (3 : 2 Gew.-Teile) gemessen.

Der Diethylenglykolgehalt wurde gaschromatographisch im bei 200 °C im Bombenrohr erhaltenen Umesterungsgemisch von 1 g Polyester mit 30 ml Methanol und 50 mg/l Zinkacetat ermittelt.

Die Bestimmung der Festigkeit und der Bruchdehnung der Fasern erfolgte bei Raumtemperatur an einer Prüflänge von 200 mm für POY bzw. 500 mm für DTY mit einer Abzugsgeschwindigkeit von 2000 mm/min bei POY bzw. 1500 mm/min bei DTY.

Die Anfärbetiefe wurde bestimmt, indem ein rundgestrickter Schlauch aus Fasern sowohl aus zu prüfendem modifiziertem Polyethylenterephthalat als auch aus Standard-Polyethylenterephthalat hergestellt wurde. Dieser kombinierte Schlauch wurde im Färbeapparat ohne Carrier 30 min lang bei 95 °C mit 1 % Terasilmarineblau GRL-C 200 % (Ciba-Geigy, Schweiz), Flottenverhältnis 1 : 50, gefärbt. Aus der photometrisch gemessenen Remission R wird, nach Kubelka-Munk, der Wert K/S ermittelt, gemäß der Gleichung:

$$K/S = \frac{(100 - R)^2}{200\,R}$$

Die Anfärbetiefe des zu prüfenden Garnes ergibt sich aus dem Vergleich zu der des Standardmaterials:

$$\text{Anfärbetiefe (\%)} = \frac{K/S_{Probe}}{K/S_{Standard}} \cdot 100\,\%$$

Die Streifigkeit, d. h. Farbunregelmäßigkeit des gefärbten Schlauchs wurde beurteilt, indem dieser über ein Testbrett gezogen und die Streifigkeit mit 4 entsprechenden Standards verglichen wurde; die Stufe 1 bedeutet "sehr gut" (keine Streifenbildung), die Stufe 4 "schlecht" (starke Streifenbildung).

**Patentansprüche**

1. Copolyesterfaser, bestehend aus einem Copolyester mit überwiegend $C_{2-4}$- Alkylenterephtalat-Einheiten, Polyethylenglykol-Einheiten und von polyfunktionellen Verbindungen abgeleiteten Einheiten, **dadurch gekennzeichnet, dass** der Copolyester > 4 bis 12 Gew.-% Polyethylenglykol-Einheiten, mit einem Zahlenmittel des Molekulargewichtes der Polyethylenglykol-Einheiten zwischen 200 und 400 g/Mol und als von polyfunktionellen Verbindungen abgeleiteten Einheiten 60 bis 260 ppm Pentaerythrit-Einheiten enthält.

2. Copolyesterfaser nach Anspruch 1, **dadurch gekennzeichnet, dass** der Copolyester 80 bis 200 ppm Pentaerythrit-Einheiten enthält.

3. Copolyesterfaser nach Anspruch 1 oder Anspruch 2, **dadurch gekennzeichnet, dass** der Anteil an Polyethylenglykol-Einheiten 5 bis 9 Gew.-% beträgt.

**4.** Copolyesterfaser nach einem der Ansprüche 1 bis 3, **dadurch gekennzeichnet, dass** der Copolyester übliche Additive, wie Mattierungsmittel, Farbstoffe, Blautöner und/oder Stabilisatoren, enthält.

**5.** Verfahren zur Herstellung einer Copolyesterfaser durch Veresterung, Vorkondensation und Polykondensation von Terephtalsäure mit $C_{2-4}$-Alkylenglykol, Polyethylenglykol und einer polyfunktionellen Verbindung sowie Verspinnung in der Schmelze des erhaltenen Copolyesters bei Aufspulgeschwindigkeiten von mindestens 3000 m/min, **dadurch gekennzeichnet, dass** dem Reaktionsgemisch vor der Vorkondensation > 4 bis 12 Gew.-% Polyethylenglykol mit einem Zahlenmittel des Molekulargewichtes zwischen 200 und 400 g/Mol und als polyfunktionelle Verbindung 60 bis 260 ppm Pentaerythrit zugesetzt werden.

**6.** Verfahren nach Anspruch 5, **dadurch gekennzeichnet, dass** Polyethylenglykol und Pentaerythrit zugesetzt werden, wenn 50 bis 95 % der Carboxylgruppen der Dicarbonsäure(n) des Veresterungsgemisches verestert sind.

**7.** Verfahren nach Anspruch 5 oder 6, **dadurch gekennzeichnet, dass** die Menge an Polyethylenglykol im Copolyester 5 bis 9 Gew.-% beträgt.

**8.** Verfahren nach einem der Ansprüche 5 bis 7, **dadurch gekennzeichnet, dass** dem Reaktionsgemisch zu einem beliebigen Zeitpunkt vor der Verspinnung übliche Additive, wie Mattierungsmittel, Farbstoffe, Blautöner und/oder Stabilisatoren zugesetzt werden.

**9.** Verfahren nach einem der Ansprüche 5 bis 8, **dadurch gekennzeichnet, dass** das $C_{2-4}$-Alkylenglykol Ethylenglykol ist, wobei Terephthalsäure und/oder Ethylenglykol zu 0 bis 10 Gew.-% durch andere Dicarbonsäuren und/oder Diole ersetzt sein können.

**10.** Verfahren nach einem der Ansprüche 5 bis 7, **dadurch gekennzeichnet, dass** die Copolyesterfaser durch Strecktexturierung bei mindestens 500 m/min weiterverarbeitet wird.

**Claims**

**1.** Copolyester fibre, consisting of a copolyester with predominantly $C_{2-4}$-alkylene terephthalate units, polyethylene glycol units and units derived from polyfunctional compounds, **characterised in that** the copolyester consists of > 4 to 12 weight percent polyethylene glycol units with a numerical mean of the molecular weight of the polyethylene glycol units of between 200 and 400 g/mol and 60 to 260 ppm pentaerythrite units as units derived from polyfunctional compounds.

**2.** Copolyester fibre according to claim 1, **characterised in that** the copolyester consists of 80 to 200 ppm pentaerythrite units.

**3.** Copolyester fibre according to claim 1 or 2, **characterised in that** the proportion of polyethylene glycol units is 5 to 9 weight percent.

**4.** Copolyester fibre according to one of claims 1 to 3, **characterised in that** the copolyester comprises the usual additives, such as delustring agents, colorants, blue toning agents and/or stabilisers.

**5.** Method for producing a copolyester fibre by esterification, precondensation and polycondensation of terephthalic acid with $C_{2-4}$ alkylene glycol, polyethylene glycol and a polyfunctional compound as well as spinning in the melt of the copolyester obtained at spooling speeds of at least 3,000 m/min, **characterised in that** prior to the precondensation > 4 to 12 weight percent polyethylene glycol with a numerical mean of the molecular weight of between 200 and 400 g/mol and 60 to 260 ppm pentaerythrite as a polyfunctional compound are added to the reaction mix.

**6.** Method according to claim 5, **characterised in that** polyethylene glycol and pentaerythrite are added when 50 to 95 % of the carboxyl groups of the dicarboxylic acid(s) of the esterification mix are esterified.

**7.** Method according to claim 5 or 6, **characterised in that** the amount of polyethylene glycol in the copolyester is 5 to 9 weight percent.

**8.** Method according to one of claims 5 to 7, **characterised in that** at any time prior to the spinning the usual additives, such as delustring agents, colorants, blue toning agents and/or stabilisers, are added to the reaction mix.

**9.** Method according to one of claims 5 to 8, **characterised in that** the $C_{2-4}$-alkylene glycol is ethylene glycol, whereby the terephthalic acid and/or ethylene glycol can be replaced by 0 to 10 weight percent by other dicarboxylic acids and/or diols

**10.** Method according to one of claims 5 to 7, **characterised in that** the copolyester fibre is further processed by stretch texturing at at least 500 m/min.


**Revendications**

**1.** Fibre de copolyester, constituée d'un copolyester avec majoritairement des motifs téréphtalate d'alkylène en $C_{2-4}$, des motifs polyéthylèneglycol et des motifs dérivés de composés polyfonctionnels, **caractérisée en ce que** le copolyester contient > 4 à 12 % en poids de motifs polyéthylèneglycol, avec une masse moléculaire moyenne en nombre des motifs polyéthylèneglycol entre 200 et 400 g/mole et 60 à 260 ppm de motifs pentaérythritol comme motifs dérivés des composés polyfonctionnels.

**2.** Fibre de copolyester selon la revendication 1, **caractérisée en ce que** le copolyester contient 80 à 200 ppm de motifs pentaérythritol.

**3.** Fibre de copolyester selon la revendication 1 ou la revendication 2, **caractérisée en ce que** la quantité de motifs polyéthylèneglycol est de 5 à 9 % en poids.

**4.** Fibre de polyester selon l'une des revendications 1 à 3, **caractérisée en ce que** le copolyester contient des additifs habituels, comme des agents de matité, des colorants, des azurants et/ou des stabilisants.

**5.** Procédé de préparation d'une fibre de copolyester par estérification, précondensation et polycondensation d'acide téréphtalique avec un alkylèneglycol en $C_{2-4}$, le polyéthylèneglycol et un composé polyfonctionnel ainsi que le filage à l'état fondu du copolyester obtenu avec une vitesse de bobinage d'au moins 3000 m/min, **caractérisé en ce qu'**on ajoute au mélange réactionnel avant la précondensation > 4 à 12 % en poids de polyéthylèneglycol avec une masse moléculaire moyenne en nombre entre 200 et 400 g/mole et comme composé polyfonctionnel 60 à 260 ppm de pentaérythritol.

**6.** Procédé selon la revendication 5, **caractérisé en ce que** le polyéthylèneglycol et le pentaérythritol sont ajoutés quand 50 à 95 % des groupes carboxyle du ou des acide(s) dicarboxylique(s) du mélange d'estérification sont estérifiés.

**7.** Procédé selon la revendication 5 ou 6, **caractérisé en ce que** les quantités de polyéthylèneglycol dans le copolyester sont de 5 à 9 % en poids.

**8.** Procédé selon l'une des revendications 5 à 7, **caractérisé en ce qu'**on ajoute au mélange réactionnel en un point de temps quelconque avant le bobinage des additifs habituels comme des agents de matité, des colorants, des azurants et/ou des stabilisants.

**9.** Procédé selon l'une des revendications 5 à 8, **caractérisé en ce que** l'alkylèneglycol en $C_{2-4}$ est l'éthylèneglycol, l'acide téréphtalique et/ou l'éthylèneglycol pouvant être remplacés par 0 à 10 % en poids par d'autres acides dicarboxyliques et/ou diols.

**10.** Procédé selon l'une quelconque des revendications 5 à 7, **caractérisé en ce que** la fibre de copolyester est traitée ultérieurement par une texturation par étirage d'au moins 500 m/min.